# EUROPEAN PATENT APPLICATION

(11) **EP 4 617 006 A1**
(43) Date of publication of application: **17.09.2025**
(21) Application number: 25160420.3
(22) Date of filing: 26.02.2025
(51) Int. Cl.: B25J 9/06, B25J 9/10, F01D 21/00, G02B 23/24

(54) **EXTENSION TOOL**

(30) Priority: 12.03.2024 US 202418602224
(71) Applicant: General Electric Company, Cincinnati, Ohio 45215 (US); Oliver Crispin Robotics Limited, Altrincham, Cheshire WA14 2DT (GB)
(72) Inventor: GRAHAM, Andrew Crispin, Bristol, BS34 7JU (GB); FRANCOIS, Tim Henri Ann, Bristol, BS34 7JU (GB); JAYAWICKREMA, Joanna Mechelle, Evendale, 45215 (US); GRADY, Wayne Ray, West Chester, 45069 (US); MONTOYA BLANCO, Raul, Bristol, BS34 7JU (GB)
(74) Representative: Openshaw & Co.

(57) **Abstract**

An extension tool (100) including a base link (124) comprising the proximal end (112), wherein the base link (124) includes a first bend (115). The extension tool (100) includes a transition section (104) coupled to the base link (124) and including a second bend (125) and a plurality of sequentially arranged links (106) coupled to the transition section (104) and moveable relative to one another and including a third bend (135). The extension tool (100) includes a support member (130) comprising the distal end (122), the support member (130) including a wheel (132) disposed at the distal end (122), where the support member (130) includes a fourth bend (145). The first bend (115) of the base link (124) extending in a first direction from a longitudinal centerline (CL), while the second bend (125) and the fourth bend (145) extend in a second direction substantially along the longitudinal centerline (CL) bending downward, and the third bend (135) of the plurality of sequentially arranged links (106) extends in a third direction from the longitudinal centerline (CL) bending upward.

## Description

### TECHNICAL FIELD

These teachings relate generally to a tool for inspecting an environment and/or performing maintenance, cleaning, or other operations within the environment.

### BACKGROUND

Robotic arm assemblies are useful throughout various industries for performing operations at, e.g., remote locations, hazardous locations, etc. At least certain robotic arm assemblies include a robotic arm formed of a plurality of links joined together at respective joints. Additionally, a plurality of control wires may extend through the robotic arm, with each wire terminating at an individual link for moving such link relative to an aft-adjacent link. The control wires may be coupled to one or more motors within a base of the robotic arm assembly, such that the robotic arm assembly may control a movement of the robotic arm by increasing and/or decreasing tension on the plurality of control wires.

In such a manner, robotic arms may be useful in reaching out-of-sight locations within various environments. However, robotic arms may generally be cost prohibitive and/or more complicated than desired for certain applications. Accordingly, a tool that may allow for a user to reach remote locations within an environment in a more cost efficient manner would be useful.

### BRIEF DESCRIPTION OF DRAWINGS

Various needs are at least partially met through provision of the extension tool described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 comprises a top plan view of an extension tool in accordance with various embodiments of these teachings;
FIG. 2 comprises a perspective view of an extension tool in accordance with various embodiments of these teachings;
FIG. 3 comprises a side view of an extension tool in accordance with various embodiments of these teachings;
FIG. 4 comprises a bottom view of an extension tool in accordance with various embodiments of these teachings;
FIG. 5 comprises a rear view of an extension tool in accordance with various embodiments of these teachings;
FIG. 6 comprises a perspective view of a link of an extension tool in accordance with various embodiments of these teachings;
FIG. 7 comprises a perspective view of a portion of a link of an extension tool in accordance with various embodiments of these teachings;
FIG. 8 comprises a perspective view of links of an extension tool in accordance with various embodiments of these teachings;
FIG. 9 comprises a top perspective view of a support member of an extension tool in accordance with various embodiments of these teachings;
FIG. 10 comprises a bottom perspective view of a support member of an extension tool in accordance with various embodiments of these teachings;
FIG. 11 comprises a top view of a support member of an extension tool in accordance with various embodiments of these teachings;
FIG. 12 comprises a schematic view of a gas turbine engine and extension tool in accordance with various embodiments of these teachings;
FIG. 13 comprises a perspective view of a portion of a link of an extension tool in accordance with various embodiments of these teachings;
FIG. 14 comprises a perspective view of a link of an extension tool in accordance with various embodiments of these teachings;
FIG. 15 comprises a perspective view of a link of an extension tool in accordance with various embodiments of these teachings;
FIG. 16 comprises a flow diagram of a method of inserting an extension tool according to various embodiments of these teachings; and
FIG. 17 comprises a top perspective view of a support member of an extension tool in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

Generally speaking, the various aspects of the present disclosure are directed to selectively flexible extension tools. More particularly, the present subject matter is directed to an extension tool having one or more features for facilitating insertion of the extension tool into a component and/or one or more features for facilitating communication between an internal passage of the extension tool and an environment external to the extension tool. In various embodiments, a selectively flexible extension tool comprises a plurality of sequentially arranged links moveable relative to one another and a support member defining a distal end of the extension tool. The support member includes a wheel disposed at the distal end. Further, the extension tool includes a first bend at a base link and a second bend at a transition section between the base link and a transition link, the second bend different than the first bend, a third bend along the plurality of sequentially arranged links, and a fourth bend, which may be different than or similar to the first bend, the second bend, and the third bend, at the support member.

Additionally, or alternatively, the selectively flexible extension tool comprises a plurality of windows defined in the plurality of sequentially arranged links. The windows of the plurality of windows may be defined periodically along and around the plurality of sequentially arranged links such that a periodicity of the windows corresponds to a periodicity of a plurality of features of the component. Extension tools as disclosed herein provide benefits such as positive control of the direction of insertion of the tool, without external strings or the like that could become snagged on a projection; reduced friction between the tool and the component into which the tool is inserted; and/or consistent, controllable positioning of instruments for lighting, imaging, etc. of one or more features of the component. One or more of these benefits can, for example, reduce inspection time while improving inspection quality.

The extension tools disclosed herein further provide for accessing remote locations within a component such as a gas turbine engine. For example, an extension tool having the bends disclosed and described herein facilitates insertion through openings, such as borescope opening, that are angled in a non-perpendicular direction relative a longitudinal centerline of the component. While the angle of the borescope opening may be angled in a non- perpendicular direction relative the longitudinal centerline of the gas turbine engine, the bends allow for at least a portion of the extension tool to be disposed around a longitudinal centerline substantially perpendicular to the longitudinal centerline. Further, the wheel of the extension tool avoids dragging the extension tool along a surface of the component while reducing the cost to produce the extension tool by utilizing a single wheel.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

As used herein, the terms "first," "second," and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to fluid flow in a fluid pathway. For example, "upstream" refers to the direction from which the fluid flows, and "downstream" refers to the direction to which the fluid flows.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

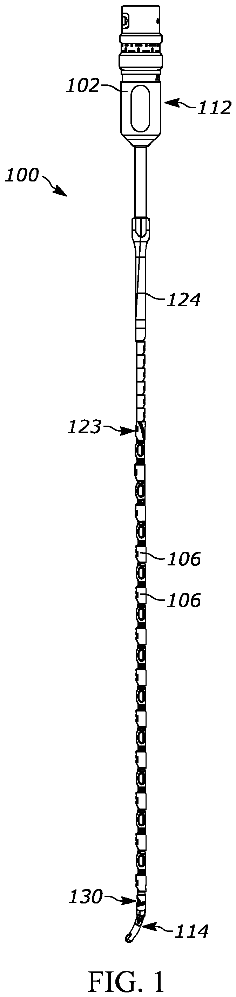

The foregoing and other benefits may become clearer upon making a thorough review and study of the following detailed description. Referring now to the drawings, wherein identical numerals indicate the same elements throughout the figures, FIG. 1 shows an extension tool 100 in accordance with an embodiment of the present disclosure. The extension tool 100 is illustrated in a tensioned or rigidized position, however, the extension tool 100 may be in a slack or slackened position. In this way, the extension tool 100 also may be referred to as a selectively rigidizable guide tube.

As used herein, a slack or slackened position may include a variety of different shapes of the extension tool 100. In this way, the slack or slackened position may be considered any position besides the tensioned or rigidized position. In the tensioned or rigidized position, a plurality of sequentially arranged links 106, as described in more detail below, are tensioned by a portion of the extension tool 100 such that each of the plurality of sequentially arranged links 106 are compressed against one another. When in the tensioned or rigidized position, the extension tool 100 may have a predefined shape. The predefined shape may, in some embodiments, mirror a shape of a component where the extension tool 100 is deployed.

As described in greater detail herein, the extension tool 100 defines one or more passages therethrough. Such passages may receive a borescope or other device capable of transmitting images captured through an image device such as a camera or the like (which may be generally referred to herein as an "image device"). Alternatively, or additionally, one or more passages defined through the extension tool 100 may deliver wash fluid (e.g., a liquid or foam detergent or other cleaning agent), cooling fluid, or other fluid, and/or may provide a conduit for materials, tools, implements, or other devices for repair, maintenance, and/or cleaning to be delivered to one or more locations within a component into which the extension tool 100 is deployed. For example, the extension tool 100 may be deployed within a component, assembly, system, apparatus, etc. and a borescope may be inserted through the extension tool 100. A defect in a feature of the component may be detected via the borescope, which may be retracted such that a repair material and/or device(s) (e.g., a manipulation device for positioning the repair material and a heat source such as a laser, resistance welding device, brazing device, etc.) may be delivered through the extension tool 100 to the defect to repair the defect. As other examples, the extension tool 100 may be used to deliver coatings, patches, fluids, cleaning materials, tools, implements, etc. to one or more features of the component in which the extension tool 100 is deployed. The extension tool 100 is a steerable device capable of a multitude of applications, e.g., through the use of the various features described in greater detail below. The component may be, for example, a gas turbine engine including various borescope openings for the extension tool 100 to be inserted into and used as outlined above.

Referring to FIGS. 1 to 5, the extension tool 100 generally includes a base or handle 102 at a proximal end 112, a plurality of sequentially arranged links 106, and a support member 130 at a distal end 114. The extension tool 100 also generally includes a base link 124, a root 108, such as an extension of the base link 124, and a plurality of lines 109, as a part of a line guide assembly 110 and/or a spine 121 extending from the root 108 and/or the base link 124, the root 108 coupled to an end of the base 102 at one end and coupled to an end of the base link 124 at the opposing end. As will be appreciated from the discussion herein, the base 102, via the line guide assembly 110 and/or the spine 121 are operable with the plurality of sequentially arranged links 106 to move the plurality of sequentially arranged links 106 between the tensioned and slack position.

The plurality of sequentially arranged links 106 are under no pressure or marginal pressure when in the slack position to allow the plurality of sequentially arranged links 106 to pivotably move relative to one another, e.g., through a hinged connection between adjacent links 106. Marginal pressure may be, for example, less than 20% of a tensioning pressure. The tensioning pressure being the amount of pressure applied to the links 106 to move the tool 100 into the predefined tensioned state. The tool 100 achieves the predefined tensioned state when the tensioning pressure is about 90% or more of the maximum tensioning pressure. For instance, in the slack position, the plurality of links 106 may be spaced from one another or under no specific pressure to hold the links 106 in a particular position. By contrast, the plurality of sequentially arranged links 106 are pressed against one another when in the tensioned position to rigidly fix the plurality of sequentially arranged links 106 to one another. As shown in FIG. 1, the line guide assembly 110 and/or the spine 121 may act as a hinge. The spine 121 may be selectively rigidizable and/or semi-flexible. The line guide assembly 110 and/or the spine 121, described in more detail below, may thus act as a hinge element between two adjacent links 106.

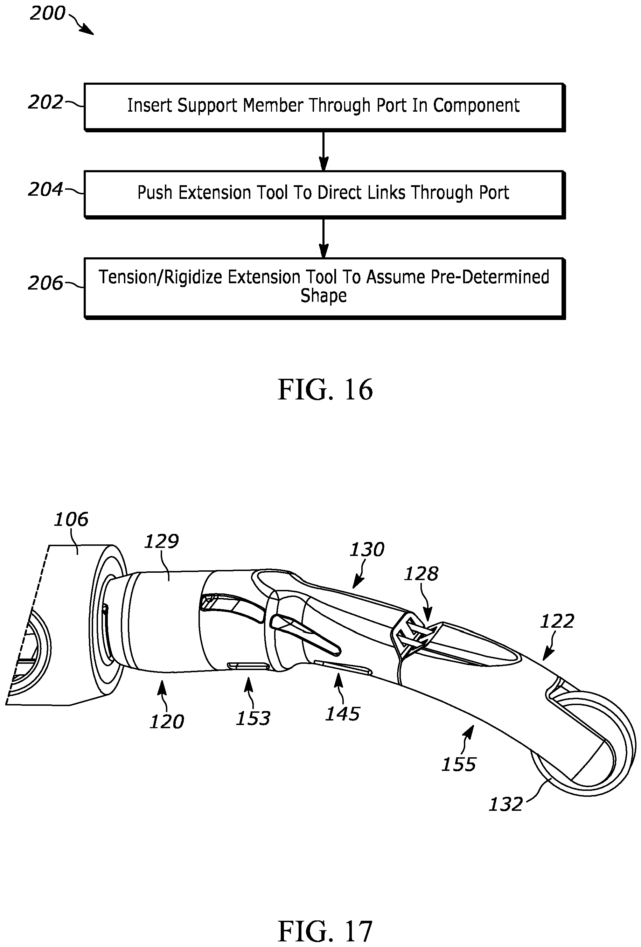

For the embodiment of FIGS. 1 to 5, it will be appreciated that each of the plurality of links 106 are designed to result in a specific rigidized shape, the predefined shape discussed above, when the plurality of links 106 are moved to the tensioned position. For example, a first link of the plurality of links 106 defines a first geometry (i.e., length, curvature, etc.) and a second link of the plurality of links 106 defines a second geometry (i.e., length, curvature, etc.). The first geometry may be different than the second geometry. In at least certain embodiments, to form the plurality of links 106 having specific geometries to facilitate a desired shape of the plurality of links 106, each of the plurality of links 106 may be formed through an additive manufacturing process (sometimes also referred to as 3D printing). Such may facilitate the formation of specifically shaped links 106 to be fitted within the plurality of links 106 of an extension tool 100 resulting in a desired shape when moved to the tensioned position, yet still remaining flexible enough to fit through an anticipated environment, as described in more detail below with reference to FIG. 16.

Further, in at least certain embodiments, the plurality of links 106 may be formed from one or more materials to, e.g., optimize the material properties of each link 106 based on the function of the respective link 106 in the extension tool 100. For instance, the links 106 closer to the base 102, such as the links from the base link 124 to a transition link 123, may be formed from a stiffer material than the links 106 distal of the transition link 123 because the proximal links 106, e.g., may be more curved or have a smaller radius of curvature, may experience greater stresses as the extension tool 100 is inserted and/or tensioned, etc. In some embodiments, the proximal links 106 may be formed from a first material such as a steel or the like, while the links 106 distal of the transition link 123 are formed from a second material that is a lighter and/or less stiff material, such as a plastic or the like. Other suitable materials also may be used, and it will be appreciated that, in at least some embodiments, the plurality of links 106 may be formed from the same material rather than different materials.

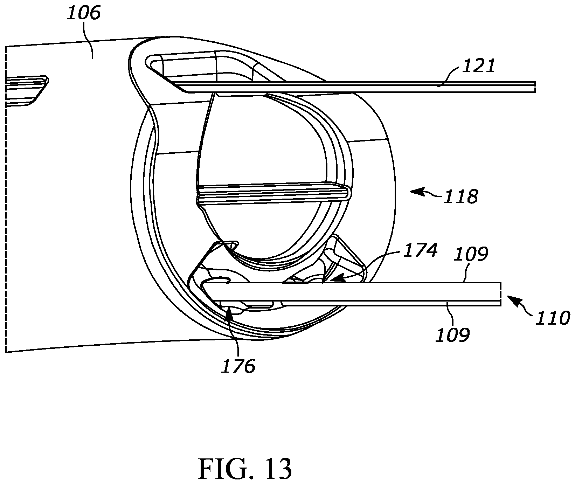

Moreover, with regard to the line guide assembly 110 and/or the spine 121, it will be appreciated that each of these may be configured as cables, ropes, threads, etc. Accordingly, it will be appreciated that the line guide assembly 110 includes lines 109 and line guide channels 174 and 176 described in more detail below with reference to FIGS. 13 to 15. The lines 109 are generally flexible (i.e., will not significantly prevent the plurality of sequentially arranged links 106 from pivotably moving relative to one another in the slack position). It will further be appreciated that the spine 121 may be semi-flexible (i.e., will not significantly prevent the plurality of sequentially arranged links 106 from pivotably moving relative to one another in the slack position), or rigidizable by the base 102. Moreover, one or more of the lines 109 and/or the spine 121 may be formed of a metal material, such as a steel, tungsten, NiTiNOL, etc. Alternatively, however, the lines 109 and/or the spine 121 may be formed of any other suitable material.

In at least certain embodiments, it will be appreciated that the extension tool 100 depicted in FIGS. 1 to 5 may include a tool implement coupled to one of the plurality of links 106. For example, the tool implement may be coupled to the link 106 at the distal end 114 of the extension tool 100. In certain embodiments, the tool implement may include one or more sensors, cameras, or both, and additionally, or alternatively, may include one or more drills, laser tools, welding implements, rotatable implements (such as a Phillips head screwdriver bit, a flat head screwdriver bit, a Torx bit, Allen bit, Pozidrive, or the like), etc. In such a manner, the extension tool 100 may facilitate performing mechanical operations on a part at a remote location, or along an obscure vector within an environment (e.g., along a nonlinear path within the environment) that would otherwise be more difficult.

It will further be appreciated, however, that in other embodiments, the extension tool 100 may be configured in any other manner to perform operations at a remote location, or along an obscure vector, within an environment.

For instance, with one or more of the configurations, the extension tool 100 may include an implement, device, or the like extending through an interior of the plurality of links 106, and more specifically, through a tube defined along a length of the plurality of links 106. Specifically, for the embodiment shown, the extension tool 100 is configured such that the plurality of sequentially arranged links 106 defines one or more passages 116 therethrough when the plurality of sequentially arranged links 106 are tensioned together. In various embodiments, the passage 116 may be a fluid flow passage, may be configured to, e.g., act as a guide tube for a tool, implement, or other device, or may be a combination of different types of passages, such as a fluid flow passage surrounding a guide tube.

It will be appreciated, that as used herein, the term "fluid flow passage" refers to any substantially continuous passage 116 through the plurality of sequentially arranged links 106 when the plurality of sequentially arranged links 106 are in the tensioned position, capable of providing a gas or liquid flow to a location proximate the distal end 114 of the plurality of sequentially arranged links 106, or extracting a gas or liquid flow from a location proximate the distal end 114 of the plurality of sequentially arranged links 106.

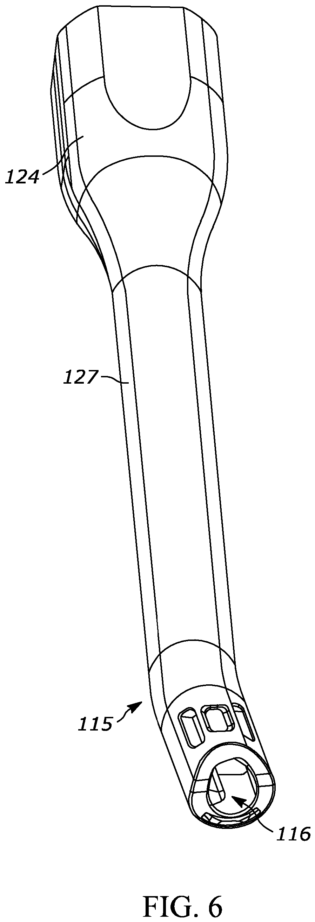

In the embodiment depicted in FIGS. 1 to 6, the plurality of sequentially arranged links 106 together define a passage 116, (FIG. 6), which, for the embodiment shown, is a guide tube 116. As such, with or without a tool implement as described above, the plurality of links 106 define an opening for receipt of one or more implements, and/or devices, such as a borescope, a maintenance or repair tool, a cleaning implement, or other device. It will be appreciated that, to form the passage or guide tube 116, each link 106 of the plurality of links 106 defines an opening 118 therethrough, e.g., as best illustrated in FIG. 13. The opening 118 of each link 106 may be defined along a length thereof. The openings 118 of adjacent links 106 in the plurality of sequentially arranged links 106 align in the tensioned position to define the passage or guide tube 116 for the one or more implements, and/or devices to pass or travel therethrough. The borescope may be utilized to provide a rigidity or stiffness to the plurality of sequentially arranged links 106. In this way, the plurality of sequentially arranged links 106 may be selectively rigidized or stiffened by the borescope extending through the passage 116.

Further, although depicted with only one passage 116, in other embodiments the extension tool 100 may include two or more passages. For example, the extension tool may include a second passage that is separate from the passage 116 when the plurality of sequentially arranged links 106 are in the tensioned position. Thus, the passage 116 is a first or an inner passage and the second passage is an outer passage, e.g., an outer fluid flow passage for flowing a fluid along an outer surface of the passage or guide tube 116. In such a manner, the inner passage is positioned radially inward of the outer passage, with the outer passage substantially completely surrounding the inner fluid flow passage. As such, the outer passage may define a generally annular shape surrounding the inner fluid flow passage. The inner and outer passages may be coaxial and/or concentric. However, in other embodiments, the two or more passages may be arranged in any other suitable manner. For example, first and second passages may instead run parallel and adjacent to one another but may not be arranged concentrically (e.g., one of the first or second passages extending along one side of the plurality of links 106 and the other of the first or second passages extending along another side of the plurality of links 106).

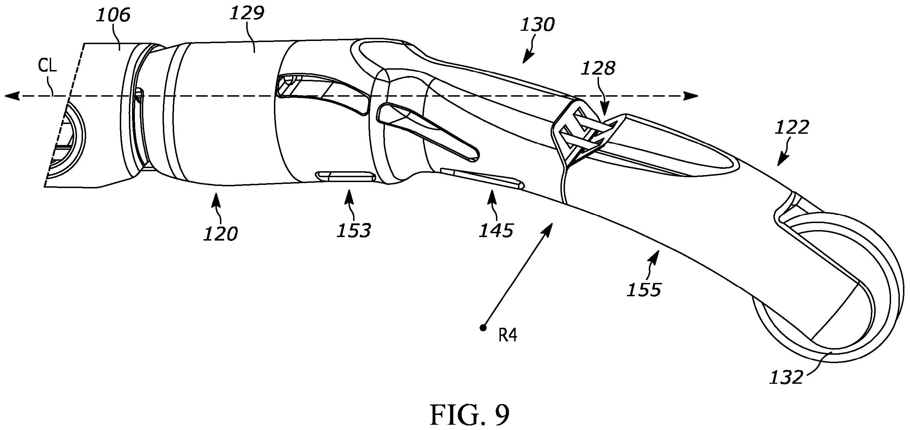

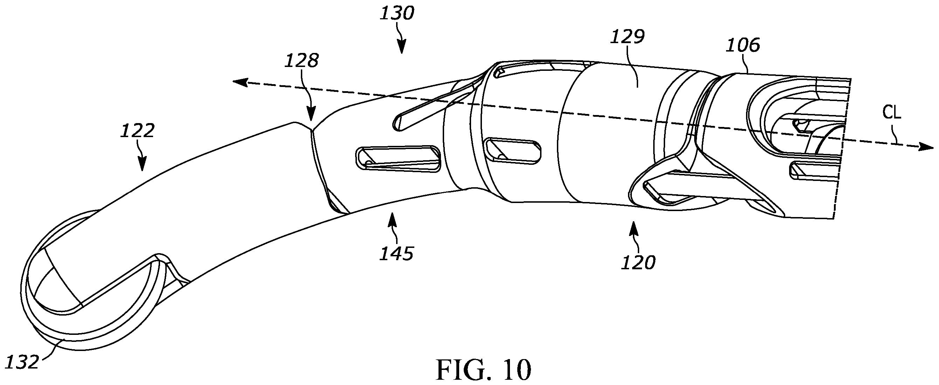

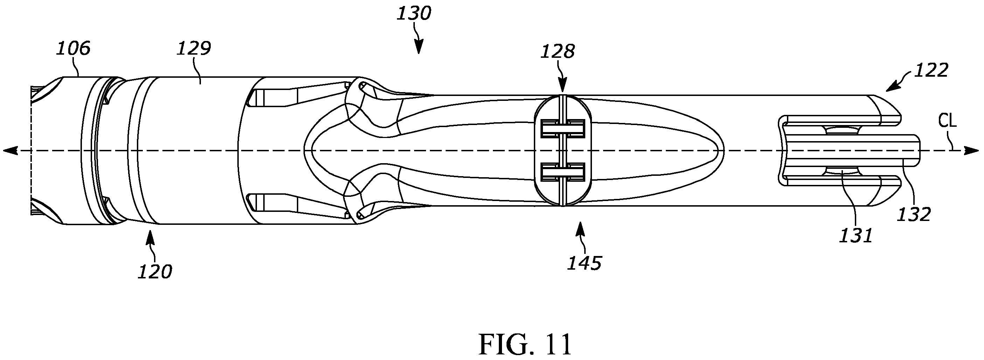

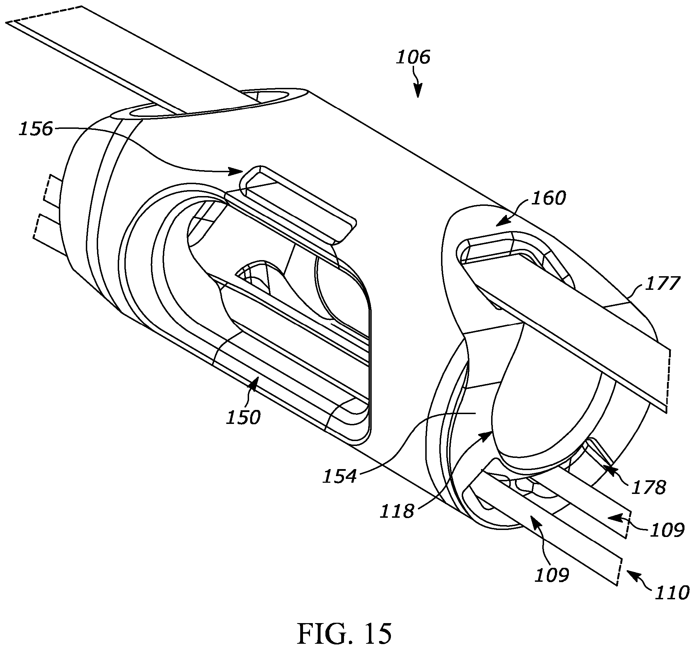

Referring again to FIGS. 1 to 5, it will be appreciated that the line guide assembly 110 is operable with the plurality of sequentially arranged links 106 to move the plurality of sequentially arranged links 106 between the slack position and tensioned position. Specifically, the lines 109, as shown in FIG. 15, may loop around the plurality of links 106 through a connecting link 129, described in more detail below with reference to FIGS. 9-11, at the distal end 114 of the plurality of links 106. When the lines 109 are tensioned by applying a tensioning force to the lines of the lines 109 (such that an amount of slack is taken out of the lines) the tensioning force or pressure in the lines 109 presses each of the plurality of sequentially arranged links 106 against one another, fixing the plurality of sequentially arranged links 106 in position to form a substantially rigid extension. Notably, for the embodiment shown, the plurality of links 106 includes a base link 124 fixed to the base 102, allowing the lines 109 to be pulled tight.

Further referring to FIGS. 1 to 5, it will be appreciated that the spine 121 is operable with the plurality of sequentially arranged links 106 to move the plurality of sequentially arranged links 106 between the slack position and tensioned position. Specifically, the spine 121 may include a rigidizable structure such that when the spine 121 is tensioned by applying a tensioning force to the spine 121, the tensioning force pulls each of the plurality of sequentially arranged links 106 against one another, fixing the plurality of sequentially arranged links 106 in position to form a substantially rigid extension tool. Similar to the line guide assembly 110 the base link 124 fixed to the base 102 allows for the spine 121 to be pulled tight. In further embodiments, the spine 121 may include a rigidizable structure such that when a compression force is applied to the spine 121, the compression force pushes each of the plurality of sequentially arranged links 106 into one another, fixing the plurality of sequentially arranged links 106 in position to form a substantially rigid extension tool.

The lines 109 and spine 121 may be operable together or separately operable with the plurality of sequentially arranged links 106 to move the plurality of sequentially arranged links 106 between the slack position and tensioned position. The lines 109 and spine 121 may be tensioned by applying a tensioning force. The spine 121 and lines 109 may be disposed on opposite sides of the plurality of sequentially arranged links 106 to allow for the extension tool 100 to be rigidized on one side as opposed to the other.

In some embodiments the spine 121 may be utilized to maintain a certain rigidity of the extension tool 100 while the lines 109 are operable with the plurality of sequentially arranged links 106 to move the plurality of sequentially arranged links 106 between the slack position and tensioned position. Conversely, in some embodiments the lines 109 may be utilized to maintain a certain rigidity of the extension tool 100 while the spine 121 are operable with the plurality of sequentially arranged links 106 to move the plurality of sequentially arranged links 106 between the slack position and tensioned position.

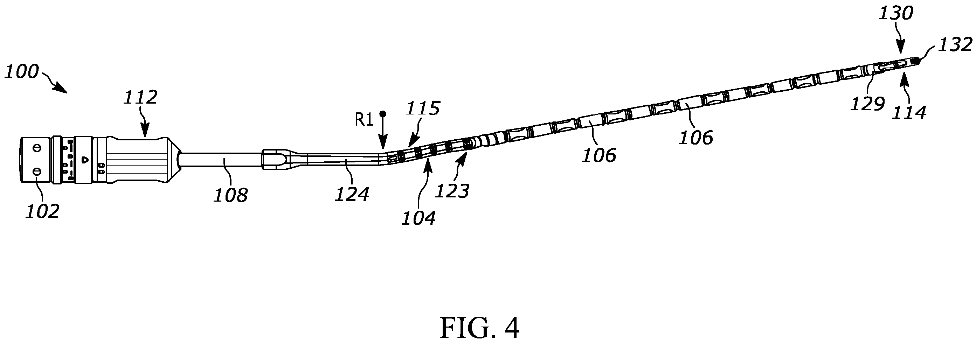

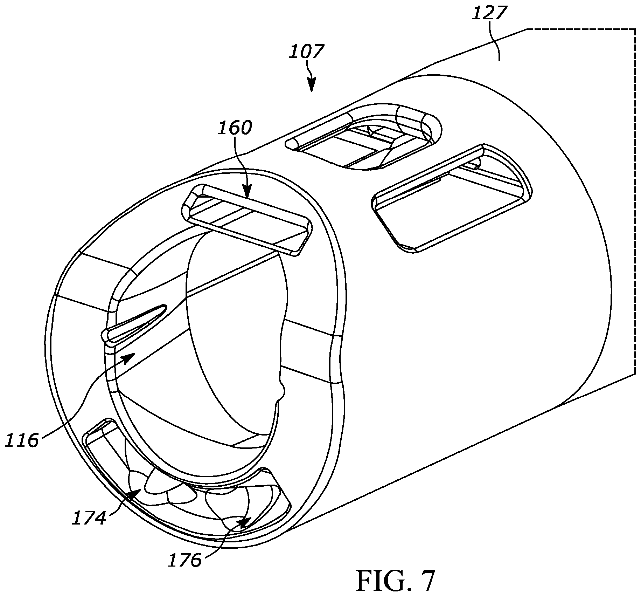

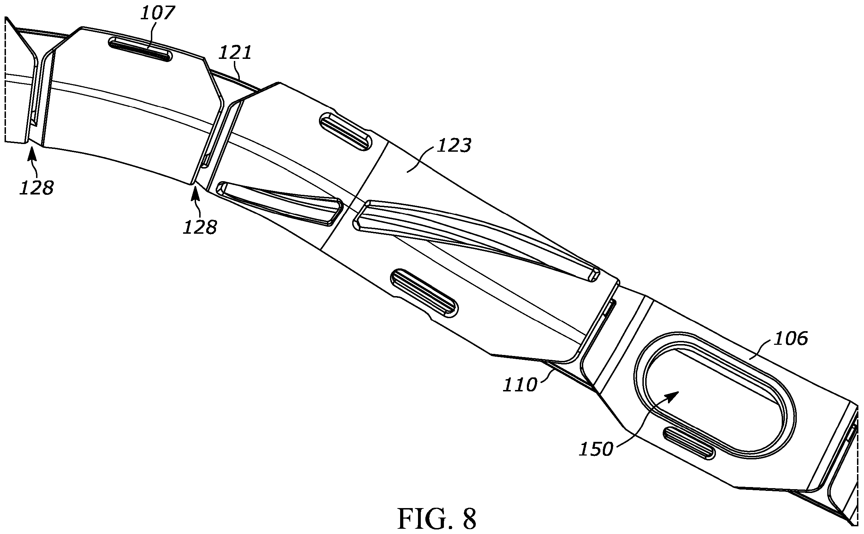

Referring back to FIG. 6, the base link 124 is shown. The base link 124 includes a base link extension 127, a first bend 115, and a transition link 123, shown in FIGS. 1 to 5 and described herein with reference to FIGS. 7 and 8, coupled to an end of the base link 124 or the base link extension 127. The base link extension 127 and the first bend 115 allow for the extension tool 100 to be inserted into various different angles and depth openings in the component. By selecting and/or varying the length of the base link extension 127, the extension tool 100 is able to properly be inserted into the opening and have the plurality of sequentially arranged links 106 properly tensioned to align with an inner surface of the component. The first bend 115 of the base link 124 allows the extension tool 100 to be inserted into angled openings while allowing the plurality of sequentially arranged links 106 to extend substantially in line with one another, as shown in FIG. 4.

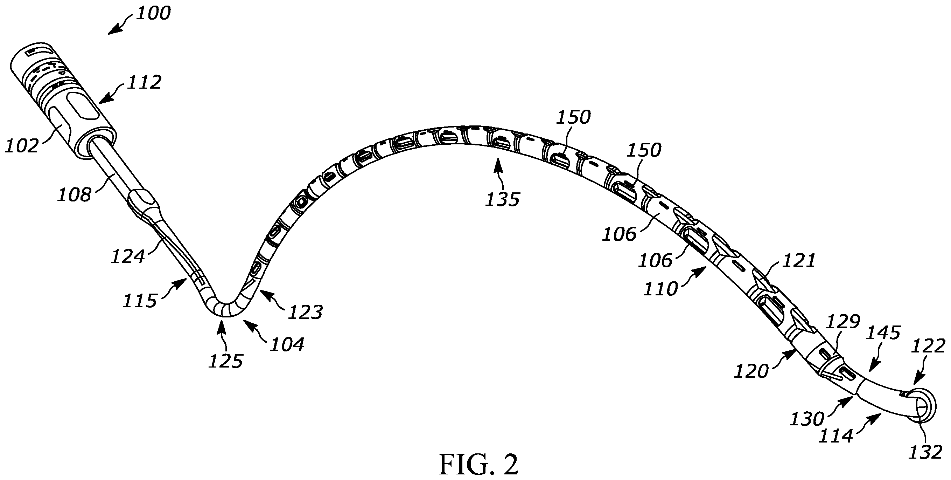

Referring to FIGS. 6 to 8, a distal end of the base link 124 and the transition link 123 are shown. The transition link 123 is coupled to a transition section 104, as shown in FIGS. 2 to 4, of the extension tool 100. The transition section 104 extends between the base link 124 and the transition link 123. The transition section 104 includes a second plurality of sequentially arranged links 107 at one end and the plurality of sequentially arranged links 106 at the opposing end. The transition link 123 includes geometry such that the base link 124 transitions to the plurality of sequentially arranged links 106. In this way, the extension tool 100, via the transition section 104, and in turn the second plurality of sequentially arranged links 107, and/or the transition link 123 may include off-plane transitions from the base 102 to the plurality of sequentially arranged links 106. The second plurality of sequentially arranged links 107 may be similar to the links of the plurality of sequentially arranged links 106 described below.

The transition link 123 is positioned between links with significantly different bend directions. In this way, the transition link 123 allows the hinges to be arranged to suit the different curvature directions, and further allows the line assembly 110, including the lines 109 and line guide channels 174 and 176, to be re-positioned to apply the compression to the links 106 in the appropriate arrangement around the axis of the links 106 with respect to the hinges or joints 128 or the spine 121. Relatively small changes or continuous changes in a direction may not require a transition link 123 with different features to any other link. In the case of the transition link 123 in FIG. 2, the line assembly 110 is guided around the link 106 in opposite directions to each other, to be positioned about 180 degrees around from their original position, so the arrangement of lines 109 and hinges 128 is different along the length of the transition link 123, as illustrated in FIG. 8. In some embodiments, the links 106 or the transition link 123 may require less change of curvature direction resulting in a varying configuration suitable for the desired curvature direction and/or shape.

Referring now to FIGS. 9 to 11, in various embodiments, the extension tool 100 also includes a support member 130 defining the distal end 114. The support member 130 includes a wheel 132 for controlling a direction of insertion of the extension tool 100. More particularly, for the depicted embodiments, the support member 130 includes the wheel 132 disposed at the distal end 114 of the tool and a distal end 122 of the support member 130. The wheel 132 is freely rotatable about a respective transversely extending axle 131. The wheel 132 at the distal end 114 helps guide the tip of the extension tool 100 with reduced friction, e.g., compared to a tool 100 without a wheel at its distal end. For example, the wheel 132 may roll along surfaces of the component as the extension tool 100 is being inserted into the component. The support member 130 is connected to the plurality of sequentially arranged links 106 via a connecting link 129. The connecting link 129 defines a proximal end 120 of support member 130. The wheel 132 defines the distal end 122 of the support member 130. The support member 130 includes a hinge 128 similar to that described above to tension the distal end of the support member 130 relative the proximal end 120. The hinge 128 connects a first flexible member 153 which is coupled to the distal end 114 of the extension tool 100 to a second flexible member 155 which includes the wheel 132.

The support member 130 further includes a fourth bend 145 from the connecting link 129 of the support member 130 to the distal end 122 of the support member 130. The fourth bend 145 and the wheel 132 help avoid dragging the support member 130 where the support member 130 begins to transition to an offset position with respect to the link 106 adjacent the support member 130. For instance, a support member 130 may have a bent tip or distal end 122. Without the wheel 132 and the fourth bend 145, the extension tool 100 may drag along the component, and it could be difficult for an operator or automated machine (such as a robot) to push against and overcome the friction between the extension tool 100 and the component. Further, if the extension tool 100 were to be used on a coated component, the friction and dragging caused by a tool without at least the wheel 132 or the fourth bend 145 may scratch the coated component.

In some embodiments, the support member 130, or the components thereof, such as the wheel 132 and the axle 131, may be formed by an additive manufacturing process, e.g., a 3D printing process such that the wheel 132 and the axle 131 are integral to one another. In some embodiments, the axle 131 is integrally formed with the distal end 122 of the support member 130. In yet further embodiments, the axle 131 is a thru-axle produced separately and passed through the wheel 132 at the distal end 122 of the support member 130.

As shown in FIGS. 9 to 11, the support member 130 extends along a support member longitudinal centerline CL such that the distal end 114, which is defined by the support member 130 and the distal end 122 of the support member 130, is bent or biased away from the support member longitudinal centerline CL. Further, as shown most clearly in FIG. 9 for the illustrated embodiment, the support member 130 is biased in a direction opposite to the direction of curvature, R4, described in more detail below, such that, together, the plurality of sequentially arranged links 106, which result in the curvature R4, form an arc shape for traversing an annular or circular component, assembly, system, etc. In other embodiments, the plurality of links 106 may define other shapes upon tensioning, depending on the shape of the component, assembly, system, etc. into which the extension tool 100 is inserted. It will be appreciated that the support member 130 is biased in a direction to facilitate insertion of the extension tool 100 into the device or apparatus undergoing inspection, maintenance, cleaning, etc. The distal end 114 of the extension tool 100, along with the wheel 132 positioned at and near the distal end 114, helps control the insertion direction of the extension tool 100. Such positive control of the insertion direction, through the offset wheeled tip provided by the biased support member 130, may be particularly beneficial for insertion in annuli and, more particularly, "upward" insertion, or insertion against gravity, in annuli.

As shown in FIG. 17, in some embodiments, the support member 130 may be insertable and removable through the passage 116, described in detail above with reference to FIGS. 1 to 5 and shown in FIG. 6. In this way, the distal link of the plurality of sequentially arranged links 106, such as the connecting link 129, includes an actuatable mechanism, or a collar. For example, the extension tool 100, including the support member 130, may be inserted into the engine. Once in position, the actuatable mechanism of the distal link can be actuated such that the support member 130 is released from the connecting link 129. The support member 130 may then be removed through the passage 116 to allow a borescope or other structure, mechanism, or fluid to pass therein. The support member 130 may be inserted back through the passage 116 of the plurality of sequentially arranged links 106, reattached to the connecting link 129 , and the extension tool 100 may be removed. In such an embodiment, the connecting link 129 may act as a collar to hold the support member 130 to the distal link. In some embodiments, the connecting link 129, acting as the collar, may include an actuatable mechanism such that the support member 130 can be removed from the distal link, i.e., the support member 130 can be removably coupled to the extension tool 100.

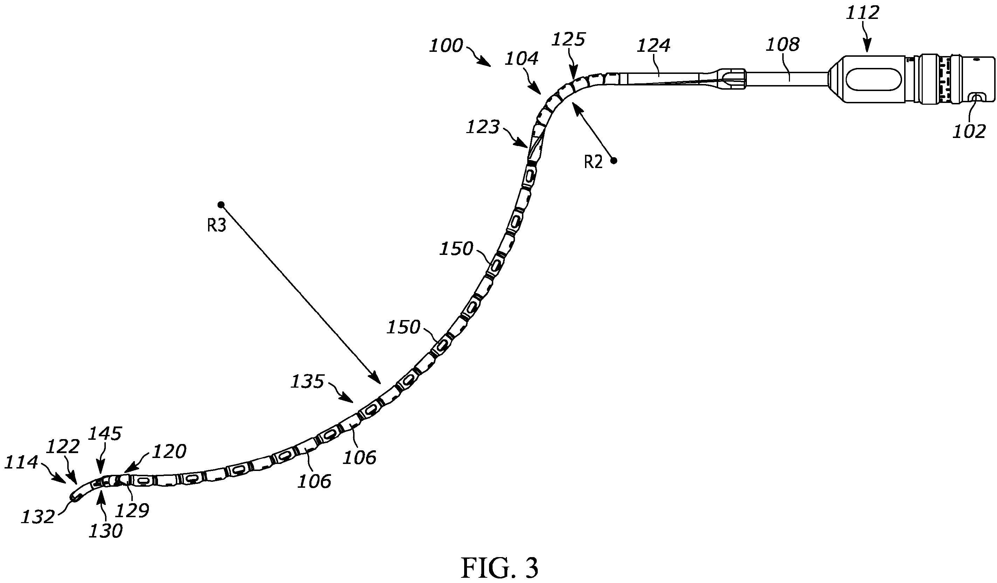

As shown in FIGS. 2 and 3, the plurality of sequentially arranged links 106 defines a plurality of windows 150. The windows 150 define openings in the links 106 for communication between the internal passage 116 defined by the links 106 and the environment external to the extension tool 100. The windows 150 of the plurality of windows 150 are defined periodically along the plurality of links 106. A periodicity of the windows 150 may be defined by the windows 150 and corresponds to a periodicity of a plurality of features of the component, assembly, system, device, apparatus, etc. in which the extension tool 100 is deployed. That is, a location of each window 150 corresponds to a periodic feature of the component, etc. in which the extension tool 100 is deployed for inspection, maintenance, cleaning, etc. In yet further embodiments, the plurality of windows 150 may spiral around the plurality of sequentially arranged links 106. That is, the location of each window 150 may vary link to link to provide a variety of different viewing angles in with the extension tool 100 is deployed. In such embodiments, the pitch of the spiral may correspond to a periodic feature of the component, etc.

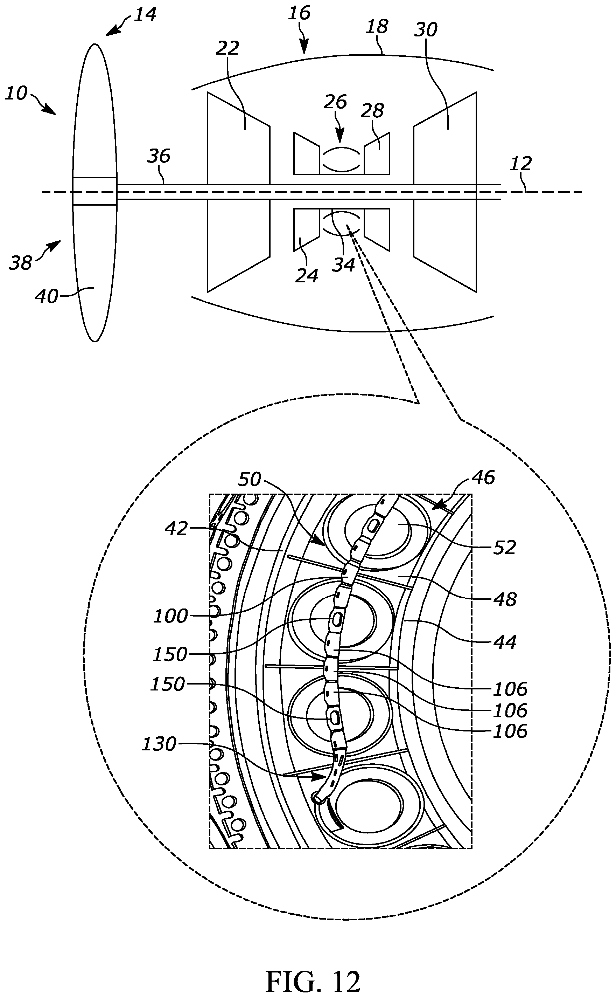

For example, referring to FIG. 12, one application of the various extension tools of the present disclosure will be described. Specifically, FIG. 12 depicts an extension tool 100 in accordance with an embodiment of the present subject matter being utilized to navigate through a nonlinear path within an environment, which for the embodiment shown is a gas turbine engine 10. Specifically, for the embodiment of FIG. 12, the gas turbine engine 10 is configured as a turbofan engine. The turbofan engine generally includes a fan section 14 and a turbomachine 16.

The turbomachine 16 generally includes a compressor section having a low pressure ("LP") compressor 22 and a high pressure ("HP") compressor 24; a combustion section 26; a turbine section including an HP turbine 28 and an LP turbine 30; and an exhaust section (not shown). The compressor section, combustion section 26, turbine section, and exhaust section are each arranged in serial flow order. The LP compressor 22 and LP turbine 30 are coupled through an LP shaft 36, and similarly, the HP compressor 24 and HP turbine 28 are coupled to an HP shaft 34. Additionally, the turbomachine 16 includes a casing 18 enclosing at least in part the above-noted components of the turbomachine 16. Further, for the embodiment shown, the fan section 14 includes a fan 38 having a plurality of fan blades 40, with the fan 38 and plurality of fan blades 40 being driven by the LP shaft 36.

In the highlighted portion shown by the dotted line and circle, an orthogonal close-up, schematic view of a portion of the combustion section 26 of the gas turbine engine 10 is provided. The combustion section 26 generally includes an inner liner 42 and an outer liner 44, together defining at least in part a combustion chamber or combustor 46. The combustion section 26 further includes a plurality of deflectors 48, which are disposed in a periodic arrangement about a longitudinal centerline axis 12 of the gas turbine engine 10. More particularly, the deflectors 48 may be disposed at a forward end of the combustor 46, between the annular inner liner 42 and the annular outer liner 44. Each deflector 48 has an opening 50 into which a fuel nozzle 52 is disposed when the engine 10 is assembled. It will be appreciated that the deflectors 48 and the fuel nozzles 52 are disposed in a regular, periodic arrangement about the annular forward end of the combustor 26.

After operating for an amount of time, an undesirable amount of coke buildup may form on or within the fuel nozzles 52. For example, during a shutdown of the gas turbine engine 10, fuel may remain within a fuel nozzle 52 and residual heat within the gas turbine engine 10 may cause the remaining fuel to coke. During, e.g., a maintenance interval, the extension tool 100 may be utilized to remove the buildup of coke on or within the fuel nozzles 52. Further, the extension tool 100 may be utilized for inspection of the deflectors 48, repair of any damage to the deflectors 48, application or re-application of a coating to the deflectors 48, and/or cleaning of the deflectors 48. In further embodiments, the extension tool 100 may be utilized for inspection of an aft heat shield of the fuel nozzles 52, repair of any damage to the aft heat shield of the fuel nozzles 52, application or re-application of a coating to the aft heat shield of the fuel nozzles 52, and/or cleaning of the aft heat shield of the fuel nozzles 52.

The extension tool 100 depicted in FIG. 12 may be configured in accordance with one or more of the embodiments described herein. For example, the extension tool may generally include a plurality of links 106 movable to a tensioned position (shown) having a nonlinear, two-dimensional or three-dimensional shape when in the tensioned position. Notably, the ability to additionally be moved to a slack position may assist with moving the plurality of links 106 through the gas turbine engine 10 environment and through, e.g., a port in the combustor 46 through which the extension tool 100 is inserted.

Further, the extension tool 100 may define windows 150 in the plurality of links 106 such that, in some embodiments, the windows 150 have a periodic arrangement like the deflectors 48 and fuel nozzles 52. In the depicted embodiment, the periodicity of the windows 150 matches or is the same as the periodicity of the fuel nozzles 52 (and/or the deflectors 48 and/or the openings 50) such that, e.g., a borescope or other instrument traveling through the plurality of links 106 can inspect, perform maintenance on, clean, or otherwise service each periodic feature (e.g., the deflectors 48 and/or the fuel nozzles 52 received therein). That is, one window 150 of the plurality of windows 150 aligns with a respective one feature of the plurality of features (e.g., a respective deflector 48 and/or a respective fuel nozzle 52) to facilitate inspection, maintenance, cleaning, servicing, etc. of each feature. In yet further embodiments, the windows 150 have a periodic arrangement which may spiral along the plurality of sequentially arranged links 106 such that several different views along the extension tool 100 can be achieved both during insertion, removal, and while in place.

The corresponding periodicity between the windows 150 and the features helps ensure each feature is inspected or otherwise serviced. To further ensure that no feature is overlooked, or to help provide specialized service to one or more particular features, each window 150 defined in the extension tool 100 may be labeled and indexed to a respective feature of the plurality of features. Further, the extension tool 100 may be developed for the specific component including the features (e.g., the combustor 26) such that it may be readily determined, e.g., through the periodicity of the features and the corresponding periodicity of the windows 150, which window 150 aligns with which feature when the extension tool 100 is inserted into the component at a given location in a given direction.

It will be appreciated that, in various embodiments, the plurality of features may be a plurality of turbine nozzle airfoils of the engine 10, a plurality of compressor blades of the engine 10, a weld line of a pressure vessel, an internal structural member of an oil tank, etc. The extension tool 100 may be used with a specific component, device, apparatus, etc., such that the periodicity of the windows 150 is tailored to the periodicity of the relevant feature. Further, the periodicity of the windows 150 need not necessarily correspond to the plurality of links 106, i.e., a window 150 may not be defined in each link 106, the windows 150 may not be defined in the same location along each link 106, etc. For example, as shown in FIG. 12, a window 150 is only defined in every fourth link 106. Additionally, the length of each link 106 may be defined to optimize navigation of the extension tool through the component. As such, there need be no specific relationship between the length of the links 106 and the periodicity of the windows 150.

Moreover, although the links 106 depicted throughout the Figures comprise a pair of windows 150 that are defined opposite one another along a transverse direction of the link 106, the windows 150 need not be defined in pairs. More specifically, a link 106 may define only one window 150 without a second window 150 defined transversely opposite the one window. Further, the windows 150 may be defined at different positions along the perimeter or circumference of one or more links 106. For instance, for a plurality of links 106 having a generally circular cross-sectional shape as shown in the figures, a first link 106 may define a first window 150 at a first circumferential location along the first link 106, and a second link 106 may define a second window at a second circumferential location along the second link 106, where the second circumferential location is different than the first circumferential location. In other embodiments, the first link 106 may define both the first and second windows 150, with the first and second windows defined at differential circumferential locations with respect to the first link 106. In this way, the location of the windows 150 may be further tailored to the location of corresponding features or elements of the component in which the extension tool 100 is deployed, e.g., for inspection, maintenance, cleaning, etc. of the various features or elements. The periodicity of one of the windows 150 may be defined with respect to one component or feature of the gas turbine engine 10, while the periodicity of a second set of windows may be different to the first set of windows, and may be defined with respect to a second component or feature of the gas turbine engine 10.

Referring now to FIGS. 13 through 15, an individual link of the plurality of sequentially arranged links 106 has a shape at each end of the links. It will be appreciated that the link distal end 122, described above with reference to FIGS. 9 to 11, defines a protruding alignment feature 180 that mates with or is received by an intruded alignment feature 178 of an adjacent link. Thus, the alignment features 180 and 178 align adjacent links 106 with one another as the extension tool 100 is tensioned into the tensioned configuration.

Referring now to FIGS. 3 to 6, 9 and 10, in at least certain embodiments, the base link 124 includes a first bend 115, defining a first radius of curvature R1, or a first direction from the longitudinal centerline CL. The first direction may be substantially horizontal or outward compared to the longitudinal centerline. Further, the plurality of sequentially arranged links 106 includes one or more transitional link 123 in which the position of the extension tool 100 defines a second radius of curvature R2 between the base link 124 and the transition link 123, along a transition section 104, including links 107 creating a second bend 125, which extends between the base link 124 and the transition link 123, a third radius of curvature R3 between the transition link 123, along the plurality of sequentially arranged links 106 to the connecting link 129 and terminating at the proximal end 120 of the support member 130, and a fourth radius of curvature R4 at the support member 130. The second bend 125, the third bend 135, and the fourth bend 145 extend substantially along the longitudinal centerline CL. The second bend 125 and the fourth bend 145 extends in a second direction from the longitudinal centerline CL bending downward to permit the extension tool 100 to be inserted into the gas turbine engine 10 and to contact an inside surface of the gas turbine engine 10 to avoid dragging the plurality of sequentially arranged links 106 along the surface. The third bend extends in a third direction from the longitudinal centerline CL bending upward to permit the extension tool 100 to be inserted around the inside surface of the gas turbine engine 10. Further, as shown in FIGS. 3 and 4, the extension tool 100 in the tensioned position curves in four different directions. Generally, when in the tensioned position, the extension tool 100 comprises at least four arcs or curves that arc or curve in different directions, and the at least four arcs or curves may have the same or different radii of curvature. The corresponding radii and curvature of each bend may be the same or different. As shown in FIGS. 3 and 4, the first radius of curvature R1 is similar to the second radius of curvature R2, both are smaller than the third radius of curvature R3, and fourth radius of curvature R4 may be similar to R1 and R2.

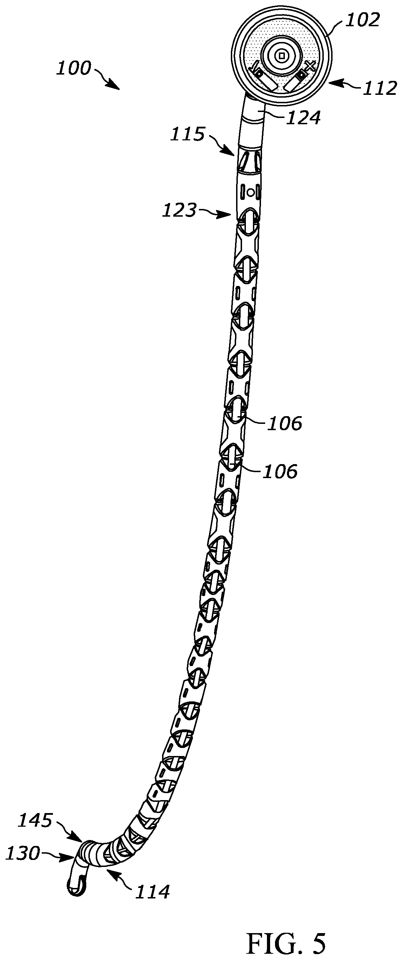

The first arc, or the first bend 115, is bent in a first direction. The first direction may be substantially side-to-side or horizontal to the longitudinal centerline CL, as shown specifically in FIG. 4. The second arc, or the second bend 125, is bent in a second direction, different than the first. The second direction, as stated above, may be substantially downward. The third arc of the third bend 135 is bent in a third direction, which may be substantially upward. The third bend 135 may be substantially in line with the second bend 125, as shown in FIG. 4, and in some embodiments, along the same or a substantially similar plane, with the first bend 115 extending outward from the plane, for example, in a substantially perpendicular direction. However, the third bend 135 may be in a different direction than the second bend 125, as shown in FIG. 5. The fourth bend 145 is bent in the second direction. The fourth bend 145 may be substantially in line with the centerline CL, with the distal end 122 of the support member 130 being bent downward from the centerline CL, similar to the second bend 125. Accordingly, the planes associated with each bend may be non-parallel in some instances, while in other instances at least two of the planes associated with each bend may be parallel to one another.

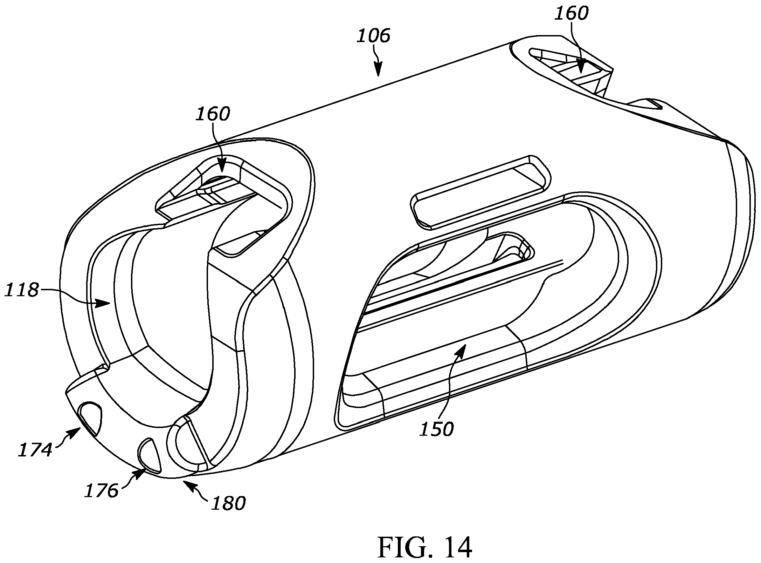

Referring back to FIG. 14, which illustrates one of the plurality of sequentially arranged links 106 including a spine channel 160, the opening 118, and line guide channels 174 and 176 associated with the line guide assembly 110. As shown, the spine channel 160 extends along the length of each link of the plurality of sequentially arranged links 106. Similarly, comparing FIG. 14 to FIG. 15, the line guide channels 174 and 176 extend the length of each link of the plurality of sequentially arranged links 106. While the spine channel 160 and the line guide channels 174 and 176 are illustrated as being opposed to one another, i.e., on opposite sides of the plurality of sequentially arranged links 106, with the windows 150 between, the present disclosure contemplates the above elements spiraling down the plurality of links 106. In this way, conjoining links may have slightly different locations of the associated elements resulting in the elements having an offset as compared to conjoining links. In these embodiments, the intruded alignment feature 178 and protruding alignment feature 180 may or may not be offset compared to each other on the same link. In instances where the intruded alignment feature 178 and the protruding alignment feature 180 are in line with one another, the line guide channels 174 and 176 may rotate about a perimeter of an end of each plurality of sequentially arranged links 106.

The extension tool 100 may include other features or elements as well. For example, the plurality of sequentially arranged links 106 may include a light element for illuminating an environment external to the plurality of links 106, such as light emitting diodes (LEDs), light pipes, etc., for providing light within the component in which the extension tool 100 is inserted. The light element(s) may be embedded into the outer opening 156, or an outside surface of one or more links 106. Alternatively, or additionally, one or more light elements may be included within the links 106, e.g., to illuminate the passage 116, described in detail above with reference to FIGS. 1 to 5 and shown in FIG. 6, to assist an image device (such as a borescope or the like) navigate the passage 116. In such embodiments, with or without light element(s) embedded in the outer opening 156, the light element(s) may be embedded into an inner surface 154 of the wall of each link 106 such that the light is directed into the passage 116. The light elements may be provided with electrical power using the line guide assembly 110 as conductors. For instance, each light element or one or more groups of light elements may be provided by power from the line guide assembly 110 via circuits connected to the lines of the line guide assembly 110 using pickups or brushes, enabling the lines to continue to move slidably within their respective passages or guides 174 or 176.

Further, in at least certain embodiments, the extension tool 100 also includes features for providing one or more fluid flows therethrough. For instance, the passage 116 may be, in whole or in part, a fluid flow passage for providing a fluid flow therethrough. In an embodiment, the passage 116 defined by the walls 177 of the plurality of links 106 is a cooling passage for receipt of a cooling fluid within the plurality of sequentially arranged links 106. In some embodiments, the passage 116 may receive a flow of the cooling fluid in addition to receiving one or more implements, tools, or other devices. For instance, the cooling fluid may flow through the passage 116 to cool the one or more implements, tools, or other devices and/or to cool the extension tool 100 and/or its surrounding environment. Such cooling may allow the extension tool 100 to be deployed within a component, system, device, or apparatus, e.g., without waiting for the component, etc. to cool to a threshold temperature. It will be appreciated that the cooling fluid may exit through the plurality of windows 150, and in embodiments comprising diverging window walls, the windows 150 may define nozzles for delivering the flow of the cooling fluid to the environment external to the extension tool 100.

As an example, the flow of the cooling fluid through the passage 116 may allow the extension tool 100 to be deployed in a gas turbine engine, such as the engine 10 shown in FIG. 12, sooner after engine shutdown than an extension tool 100 without cooling. The flow of the cooling fluid through the extension tool 100 may keep the extension tool 100 and/or the implements, tools, and/or other devices used therewith cool enough to use within the engine 10 even though the engine 10 has not cooled to a threshold temperature.

In other embodiments, the passage 116 may receive the flow of cooling fluid without receiving one or more implements, tools, or other devices, i.e., the passage 116 may be a cooling passage only. In still other embodiments, the plurality of links 106 may define one or more passages in addition to the passage 116. The other passages may receive the flow of cooling fluid in addition to the passage 116 receiving the cooling fluid or instead of the passage 116 receiving the cooling fluid. In yet other embodiments, the one or more passages defined by the plurality of links 106, including the passage 116, may receive one or more different fluid flows, e.g., a heated gas flow, a pressurized gas flow, a heated liquid flow, a pressurized liquid flow, a flow of cleaning foam or other cleaning material, etc. The different fluid flows may have different temperatures, pressures, and/or compositions. For instance, one passage may receive the flow of cooling fluid F, another passage may receive a flow of liquid detergent, etc. As another example, one passage may be configured for receipt of different fluid flows at different times during deployment of the extension tool 100 in a component, e.g., the passage may receive the flow of cooling fluid, at another time may receive the flow of liquid detergent, and at yet another time may receive a heated gas flow. As described above, the windows 150 defined in the plurality of links 106 may act as nozzles for directing the fluid (e.g., a wash fluid or foam, a detergent, a gas, etc.) external to the extension tool 100, e.g., to a specific feature of the component or to the external environment generally.

It will further be appreciated from the discussion above that for the embodiments depicted and described, adjacent links 106 are sealed together by the mating geometries at their respective ends, which are complementary in shape with the mating geometries of the adjacent links. The walls 177 of the links 106 are pressed together and the contact pressure applied by the lines 110 may form a contact seal therebetween to provide a seal between such links 106. In some embodiments the links 106 may seal together through the use of sealing elements on each end of the links 106, such as O-rings around the opening 118.

In general, the embodiments of the extension tool 100 described herein may be manufactured or formed using any suitable process. However, in accordance with several aspects of the present subject matter, the extension tool 100 may be formed using an additive-manufacturing process, such as a 3D printing process. The use of such a process may allow, e.g., each link 106 and the support member 130 to be formed as a single monolithic component, or as any suitable number of sub-components. In particular, the manufacturing process may allow each link 106 and the support member 130 to be integrally formed and include a variety of features not possible when using prior manufacturing methods. For example, the additive manufacturing methods described herein enable the manufacture of links 106 having any suitable size and shape with one or more configurations of internal cavities, passageways, sight lines, and line guides, as well as windows, end geometries, and other features which were not possible using prior manufacturing methods. Some of these novel features are described herein.

As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components. Although additive manufacturing technology is described herein as enabling fabrication of complex objects by building objects point-by-point, layer-by-layer, typically in a vertical direction, other methods of fabrication are possible and within the scope of the present subject matter. For instance, although the discussion herein refers to the addition of material to form successive layers, one skilled in the art will appreciate that the methods and structures disclosed herein may be practiced with any additive manufacturing technique or manufacturing technology. For example, embodiments of the present disclosure may use layer-additive processes, layer-subtractive processes, or hybrid processes.

Suitable additive manufacturing techniques in accordance with the present disclosure include, for example, Fused Deposition Modeling (FDM), Selective Laser Sintering (SLS), 3D printing such as by inkjets and laserjets, Sterolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), Selective Laser Melting (SLM), Direct Metal Laser Melting (DMLM), and other known processes.

In addition to using a direct metal laser sintering (DMLS) or direct metal laser melting (DMLM) process where an energy source is used to selectively sinter or melt portions of a layer of powder, it should be appreciated that according to alternative embodiments, the additive manufacturing process may be a "binder jetting" process. In this regard, binder jetting involves successively depositing layers of additive powder in a similar manner as described above. However, instead of using an energy source to generate an energy beam to selectively melt or fuse the additive powders, binder jetting involves selectively depositing a liquid binding agent onto each layer of powder. The liquid binding agent may be, for example, a photo-curable polymer or another liquid bonding agent. Other suitable additive manufacturing methods and variants are intended to be within the scope of the present subject matter.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form. More specifically, according to embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, iron, iron alloys, stainless steel, and nickel or cobalt based superalloys (e.g., those available under the name Inconel^{®} available from Special Metals Corporation). These materials are examples of materials suitable for use in the additive manufacturing processes described herein, and may be generally referred to as "additive materials."

Moreover, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed that have different materials and material properties for meeting the demands of any particular application. Further, although additive manufacturing processes for forming the components described herein are described in detail, it should be appreciated that in alternate embodiments, all or a portion of these components may be formed via casting, machining, and/or any other suitable manufacturing process. Indeed, any suitable combination of materials and manufacturing methods may be used to form these components.

Notably, in embodiments, several features of the components described herein were previously not possible due to manufacturing restraints. While the present disclosure is not limited to the use of additive manufacturing to form these components generally, additive manufacturing does provide a variety of manufacturing advantages, including ease of manufacturing, reduced cost, greater accuracy, etc.

In this regard, utilizing additive manufacturing methods, even multi-part components may be formed as a single piece of continuous material, and may thus include fewer sub-components and/or joints compared to prior designs. The integral formation of these multi-part components through additive manufacturing may advantageously improve the overall assembly process. For instance, the integral formation reduces the number of separate parts that must be assembled, thus reducing associated time and overall assembly costs. Additionally, existing issues with, for example, leakage, joint quality between separate parts, and overall performance may advantageously be reduced.

Also, the additive manufacturing methods described above enable much more complex and intricate shapes and contours of the components described herein. For example, such components may include thin additively manufactured layers, unique mating or complementary geometries, tailored cooling cavity sizes and shapes, and/or tailored passageway numbers, shapes, and paths. As a specific example, using additive manufacturing methods such as those described herein, one or more links 106 of the plurality of links 106 may be formed with unique line guide passages and sight line paths defined therein. Further, each link 106 of the plurality of links 106 may have a unique geometry, including the various passageways, line guides, and/or line guide segments 110, 174, 176, windows 150, and/or other features that may be defined therein, such that the extension tool 100 is tailored in size, shape, etc. to be used in a specific component, assembly, system, device, apparatus, etc. Moreover, additive manufacturing methods may allow manufacture of such a tailored extension tool 100, including, e.g., a plurality of unique links 106, with reduced manufacturing time, cost, and complexity compared to other manufacturing methods.

In addition, although additive manufacturing enables manufacture of single monolithic components as describe herein from a single material, the additive manufacturing process also enables the manufacture of a single component having different materials such that different portions of the component may exhibit different performance characteristics. The successive, additive nature of the manufacturing process enables the construction of these novel features. As a result, the components described herein may exhibit improved performance and reliability.

It should be appreciated that the extension tool 100, comprising a plurality of links 106 and a support member 130, described herein is only for the purpose of explaining aspects of the present subject matter. For example, the extension tool 100 is used herein to describe various configurations, constructions, and methods of manufacturing the extension tool 100. It should be appreciated that the additive manufacturing techniques discussed herein may be used to manufacture other extension tools, links, or similar components for use in any suitable device, for any suitable purpose, and in any suitable industry. Thus, the components and methods described herein are used only to illustrate aspects of the present subject matter and are not intended to limit the scope of the present disclosure in any manner.

The present subject matter also includes insertion methods, i.e., methods of inserting the extension tool 100 into a component or the like. The extension tool 100 may be configured according to any one of the various embodiments described herein. For example, as shown in FIG. 16, a method 200 includes (202) inserting the support member 130, which defines the distal end 114 of the extension tool 100, through a port or aperture in the component, such as the gas turbine engine 10 (FIG. 12). The method 200 further includes (204) pushing the extension tool 100 to direct the plurality of links 106 through the port. As described herein, the distal end 122 of each link 106 may comprise a protruding alignment feature 180, which helps guide the link 106 through the port, e.g., by "capturing" the structure defining the aperture and then sliding into the aperture. As the links 106 move through the port, adjacent links 106 close up at their mating, the intruded alignment feature 178 and the protruding alignment feature 180, e.g., to help prevent the links 106 from snagging on any projection or perpendicular surface of the component in the insertion path of the extension tool 100.

Moreover, as the extension tool 100 is pushed to direct the plurality of links 106 into the component, the support member 130 comprising the wheel 132 guides the links 106 through the component. The first bend 115, the second bend 125, the third bend 135, and the fourth bend 145, or curved tip shape of the support member 130, along with the wheel 132, may be particularly helpful for facilitating insertion into a curved component, such as an annular gas turbine engine combustor, an annular gas turbine engine turbine or compressor stage, a spherical or cylindrical pressure vessel or tank, etc., or along a nonlinear insertion path. More particularly, the curved shape and the wheel 132 of the support member 130 help prevent the links 106 from being caught or arrested on a feature or surface of the component, e.g., compared to a relatively blunt distal end of the links 106.

The method 200 also includes (206) tensioning or rigidizing the extension tool 100 such that it assumes a pre-determined shape, such as shown in FIGS. 2 to 5. In some embodiments, the extension tool 100 may be tensioned or rigidized manually, e.g., a person may manipulate an element of the base 102 by hand to tighten the line guide assembly 110 and draw together the links 106 and support member 130. In other embodiments, the extension tool 100 may be tensioned or rigidized automatically; for example, the base 102 may be coupled to or integrated with an automated machine, e.g., a robot, such that the lines 110 are tightened using numerical control, computer control, etc.

Upon insertion of the extension tool 100 into the component, for an extension tool 100 including the plurality of windows 150, the windows 150 are aligned along the length of the plurality of sequentially arranged links 106. One or more implements, tools, and/or devices may be inserted into the extension tool 100, individually (e.g., in a sequential order) or in combination with one another, to perform inspection, maintenance, cleaning, servicing, repair, or other activities. Further, one or more fluids may flow along one or more passages defined in the extension tool 100, at the same time as the one or more implements, tools, and/or devices are inserted into the tool 100 or before or after the implements, tools, and/or devices are within the tool 100. After completion of activities involving the extension tool 100, the tool 100 may be returned to its slack position and removed from the component.

It will be appreciated that, although examples of the present subject matter are described herein with respect to an aeronautical gas turbine engine, particularly a turbofan engine, the present subject matter could be used in other environments as well. For example, the extension tool 100 described herein may be used in other gas turbine engines and turbomachines. As further examples, the extension tool 100 described herein may be used for inspection, maintenance, cleaning, and/or other activities in tanks, pressure vessels, or the like, e.g., in oil and gas applications. The present subject matter may have other applications as well.

Further aspects of the disclosure are provided by the subject matter of the following clauses:

An extension tool including a base link at a proximal end of the extension tool, wherein the base link includes a first bend, a transition section including a second bend and coupled to the base link, a plurality of sequentially arranged links moveable relative to one another coupled to the transition section and including a third bend; and a support member with a wheel at a distal end of the extension tool, wherein the support member includes a fourth bend, wherein the first bend of the base link extends in a first direction from a longitudinal centerline of the extension tool, wherein the second bend and the fourth bend extend in a second direction along the longitudinal centerline bending downward, and wherein the third bend of the plurality of sequentially arranged links extends in a third direction along the longitudinal centerline bending upward.

The extension tool of any preceding clause, wherein the plurality of sequentially arranged links includes a distal link, and wherein the distal link is the support member such that the distal link comprises the distal end and includes the wheel.

The extension tool of any preceding clause, wherein the wheel is integrally formed with the distal link.

The extension tool of any preceding clause, wherein the support member includes an integrated axle to integrally couple the wheel to the support member.

The extension tool of any preceding clause, wherein the support member is removably coupled to the plurality of sequentially arranged links such that the wheel is removable from the extension tool.

The extension tool of any preceding clause, wherein the support member includes: a first flexible member for coupling to a distal link of the plurality of sequentially arranged links; and a second flexible member including the wheel.

The extension tool of any preceding clause, wherein the first flexible member and the second flexible member are coupled together via a joint.

The extension tool of any preceding clause, wherein the plurality of sequentially arranged links include an internal passage therethrough for receipt of a borescope.

The extension tool of any preceding clause, wherein a stiffness of extension tool is controlled by the borescope.

The extension tool of any preceding clause, wherein the plurality of sequentially arranged links are coupled together via a semi-flexible spine.

The extension tool of any preceding clause, wherein a rigidity of the plurality of sequentially arranged links is controlled by moving the semi-flexible spine.

The extension tool of any preceding clause, wherein the plurality of sequentially arranged links are coupled together via at least one line guide assembly.

The extension tool of any preceding clause, wherein a link of the plurality of sequentially arranged links includes a window.

The extension tool of any preceding clause, further including: a plurality of windows defined in the plurality of sequentially arranged links, wherein each window of the plurality of windows are defined periodically along the plurality of sequentially arranged links.

An extension tool including a proximal end and a distal end, the extension tool comprising a base link defining the proximal end, wherein the base link includes a first bend bending in a first horizontal direction, a transition section coupled to the base link and including a second bend bending in a second downward direction and, a plurality of sequentially arranged links moveable relative to one another, wherein each of the plurality of sequentially arranged links includes an internal passage to form a channel therethrough, and wherein the plurality of sequentially arranged links includes a third bend bending in a third upward direction substantially in line with the second bend, a distal link defining the distal end, and a support member including a wheel disposed at the distal end and a collar, wherein the support member is insertable through the channel of the plurality of sequentially arranged links, and wherein the collar contacts the distal link to hold the wheel in position.

The extension tool of any preceding clause, wherein the support member includes a fourth bend bending in the second downward direction substantially in line with the second bend and the third bend.

The extension tool of any preceding clause, wherein the first bend of the base link extends substantially perpendicular to the second bend, the third bend, and the fourth bend such that the first bend is bent outward from a longitudinal centerline.

The extension tool of any preceding clause, wherein the support member includes an integrated axle to integrally couple the wheel to the support member.

The extension tool of any preceding clause, wherein the support member includes: a first flexible member for extending through the plurality of sequentially arranged links; and a second flexible member including the wheel.

The extension tool of any preceding clause, wherein the first flexible member and the second flexible member are coupled together via a joint.

The extension tool of any preceding clause, wherein the plurality of sequentially arranged links are coupled together via a semi-flexible spine.

It will be understood that various changes in the details, materials, and arrangements of parts and components which have been herein described and illustrated to explain the nature of the disclosure may be made by those skilled in the art within the principle and scope of the appended claims. Furthermore, while various features have been described with regard to particular embodiments, it will be appreciated that features described for one embodiment also may be incorporated with the other described embodiments.

## Claims

1. An extension tool (100) comprising:
a base link (124) at a proximal end (112) of the extension tool (100), wherein the base link (124) includes a first bend (115);
a transition section (104) including a second bend (125) and coupled to the base link (124);
a plurality of sequentially arranged links (106) moveable relative to one another coupled to the transition section (104) and including a third bend (135); and
a support member (130) comprising the distal end (122), the support member (130) including a wheel (132) disposed at the distal end (122), wherein the support member (130) includes a fourth bend (145);
wherein the first bend (115) of the base link (124) extends in a first direction from a longitudinal centerline (CL) of the extension tool (100), wherein the second bend (125) and the fourth bend (145) extend in a second direction along the longitudinal centerline (CL) bending downward, and wherein the third bend (135) of the plurality of sequentially arranged links (106) extends in a third direction from the longitudinal centerline (CL) bending upward.

2. The extension tool (100) of claim 1, wherein the plurality of sequentially arranged links (106) includes a distal link, and wherein the distal link is the support member (130) such that the distal link comprises the distal end (122) and includes the wheel (132).

3. The extension tool (100) of any preceding claim, wherein the support member (130) includes an integrated axle (131) to integrally couple the wheel (132) to the support member (130).

4. The extension tool (100) of any preceding claim, wherein the support member (130) is removably coupled to the plurality of sequentially arranged links (106) such that the wheel (132) is removable from the extension tool (100).

5. The extension tool (100) of any preceding claim, wherein the support member (130) comprises:
a first flexible member for coupling to a distal link of the plurality of sequentially arranged links (106); and
a second flexible member including the wheel (132).

6. The extension tool (100) of any preceding claim, wherein the plurality of sequentially arranged links (106) include an internal passage (116) therethrough for receipt of a borescope.

7. The extension tool (100) of any preceding claim, wherein the plurality of sequentially arranged links (106) are coupled together via a semi-flexible spine (121).

8. The extension tool (100) of any preceding claim, wherein the plurality of sequentially arranged links (106) are coupled together via at least one line guide assembly (110).

9. The extension tool (100) of any preceding claim, wherein a link of the plurality of sequentially arranged links (106) includes a window (150).

10. The extension tool (100) of any preceding claim, further comprising:
a plurality of windows (150) defined in the plurality of sequentially arranged links (106),
wherein each window of the plurality of windows (150) are defined periodically along the plurality of sequentially arranged links (106).

11. An extension tool (100) including a proximal end (112) and a distal end (114), the extension tool (100) comprising:
a base link (124) defining the proximal end (112), wherein the base link (124) includes a first bend (115) bending in a first horizontal direction;
a transition section (104) coupled to the base link (124) and including a second bend (125) bending in a second downward direction and;
a plurality of sequentially arranged links (106) moveable relative to one another, wherein each of the plurality of sequentially arranged links (106) includes an internal passage (116) to form a channel therethrough, and wherein the plurality of sequentially arranged links (106) includes a third bend (135) bending in a third upward direction substantially in line with the second bend (125);
a distal link defining the distal end (114); and
a support member (130) including a wheel (132) disposed at the distal end (114) and a collar, wherein the support member (130) is insertable through the channel of the plurality of sequentially arranged links (106), and wherein the collar contacts the distal link to hold the wheel (132) in position.

12. The extension tool (100) of claim 11, wherein the support member (130) includes a fourth bend (145) bending in the second downward direction substantially in line with the second bend (125) and the third bend (135).

13. The extension tool (100) of claim 12, wherein the first bend (115) of the base (102) link (124) extends substantially perpendicular to the second bend (125), the third bend, (135) and the fourth bend (145) such that the first bend (115) is bent outward from a longitudinal centerline (CL).

14. The extension tool (100) of any of claims 11 to 13, wherein the support member (130) includes an integrated axle (131) to integrally couple the wheel (132) to the support member (130).

15. The extension tool (100) of any of claims 11 to 14, wherein the support member (130) comprises:
a first flexible member for extending through the plurality of sequentially arranged links (106); and
a second flexible member including the wheel (132).
